# EUROPEAN PATENT APPLICATION

(11) **EP 1 154 376 A1**
(43) Date of publication of application: **14.11.2001**
(21) Application number: 00201709.3
(22) Date of filing: 12.05.2000
(51) Int. Cl.: G06N 3/12, G06N 3/00

(54) **The use of proteinaceous molecules in methods for molecular computing**

(71) Applicant: Universiteit Leiden, 2300 RA Leiden (NL)
(72) Inventor: Spaink, Herman Peter, 2341 SG Oegstgeest (NL); Rozenberg, Grzegorz, 3723 JB Bilthoven (NL)
(74) Representative: Prins, Adrianus Willem

(57) **Abstract**

The present invention relates to the fields of biology and computer sciences. The present invention provides proteinaceous molecules to encode solutions to computational problems. In one aspect the invention provides the use of a proteinaceous molecule as a representation of a combination of values for variables of a computational problem. In a second aspect the invention provides a library of proteinaceous molecules representing essentially all relevant solutions to at least one computational problem. The invention further provides a nucleic acid library encoding a library of proteinaceous molecules according to the invention. In a third aspect, the invention provides a method for detecting a proteinaceous molecule representing a combination of values for variables of a computational problem comprising contacting a library of proteinaceous molecules of the invention, with a set of binding molecules designed for binding to proteinaceous molecules representing solutions. In a fourth aspect the invention provides an apparatus for providing a solution to a computational problem comprising a library of the invention, and means for detection of a solution.

## Description

The present invention relates to the fields of biology and computer sciences. The invention in particular relates to the use of biological molecules for computational purposes.

Biological molecules such as nucleic acid and protein are complex polymers of rather simple molecules. DNA (deoxyribonucleic acid) and RNA (Ribonucleic acid) are unbranched polymers used by organisms to store their genetic information. A DNA or RNA polymer is usually referred to as a nucleic acid strand and is composed of monomer molecules, which are called nucleotides. Each nucleotide is connected to the next in a polymerization process. Nucleotides differ in their bases, of which some typical representatives in DNA are: adenine (A), guanine (G), thymidine (T) or cytosine (C). Considering that for each position in a nucleic acid strand at least four possible bases are possible it is not difficult to imagine that many different sequences can be generated. In fact with each added nucleotide the number of possible combinations can be increased by a factor of four.

So, a nucleic acid strand comprises a *sequence*; this is the sequence of the nucleotides from one end of the nucleic acid strand to the other. The ends of a nucleic acid strand are chemically different: one end is called the 5' end while the other end is the 3' end. So single-stranded nucleic acid has a *sequence* and an *orientation.*

There are several features of DNA molecules which makes them in principle attractive for computing purposes, we name here three of them: (1) Watson-Crick complementarity (2) the availability of natural enzymes which can recognize DNA sequences and (3) the potential for massive parallelism.

The use of computing with biological molecules allows for the solving problems which presently do not have feasible (in time) solutions within the available silicon based technology. Computing with biological molecules and in particular DNA molecules, can solve many of such problems, because the massive parallelism of DNA strands allows the trillions of operations taking place simultaneously.

A natural target class of problems which require massive parallelism are the so-called NP-complete problems (e.g. : M. R. Garey and D. S. Johnson, Computers and Intractability, A Guide to the Theory of NP-Completeness, W.H. Freeman and Co., San Francisco, 1979.). Perhaps the most famous of the problems from this class is the satisfiability (SAT) problem for Boolean formulas (explained below). Adleman (L. M. Adleman, Science, 266: 1021-1024, 1994) was the first to conduct an experiment that constituted a "proof of principle" for the use of DNA computing for solving an NP-complete problem. After this pioneering work a number of DNA-based computing methods have been investigated. The method used by Adleman is the filtering method. It starts with a set of DNA molecules which represent all possible assignments to all variables of a given problem (called the combinatorial library) and then filters out the molecules corresponding to good solutions. Lipton (R. J. Lipton, Science, 268: 542-545, 1995) has outlined a solution for the SAT problem using the filtering method.

The capacity of nucleic acid to hybridize to complementary nucleic acids is used to select or block solutions in the library. By hybridizing a complementary nucleic acid to a DNA molecule representing a particular solution said DNA molecule can be selected or de-selected in the library. The hybridization technique makes it possible to discriminate between a large number of different nucleic acids having different sequences, particularly when the DNA molecules are relatively small. When the size of the complementarity region increases, the discriminating power of hybridization decreases. This is due the fact that, in large molecules, regions that show at least partial overlap with DNA molecules representing different solutions become larger. This false hybridization can wrongly affect the outcome of a computation and is therefore not desired. Since the size of the DNA molecules increases with increasing complexity of the computational problem encoded therein, this false hybridization is particularly a problem for very complex computational problems.

False hybridization can be reduced in a number of ways. One can reduce the chances for false hybridization by carefully selecting the sequences used to encode the values for the variables. One can also reduce false hybridization by increasing the number of nucleotides to encode a value. However, it is difficult to completely prevent false hybridization in complex problems. Moreover, increasing the size of the DNA molecules significantly adds to the cost of the procedure.

The present invention provides proteinaceous molecules to encode solutions to computational problems. A proteinaceous molecule, like a nucleic acid, can be a string of building blocks which comprises a sequence. In addition, molecules capable of binding to proteinaceous molecules in a sequences dependent manner, are readily available. Such binding molecules can be antibodies, ligands, receptors, peptidases adhesion molecules, selected peptides etc.

The use of proteinaceous molecules for representing solutions to a computational problem has several advantages over the use of nucleic acids:
i - the number of different building blocks that are available to generate proteinaceous molecules, is much larger than for nucleic acids. There are 20 common amino acids and many more uncommon ones, whereas there are essentially only 4 nucleotides. Moreover, a side chains of amino-acids can be modified or substituted thus increasing the diversity even more.
ii - discriminative binding to a nucleic acid is driven by basepairing of nucleotides. There are effectively only two couples of nucleotides available for such basepairing. The A-T couple and the C-G couple. Binding molecules for proteinaceous molecules do not have this limitation. Binding molecules can be designed against a large number of different amino-acid combinations. Binding of a molecule to such combination is, apart from physical blocking, generally independent of other amino-acids in the proteinaceous molecule.
iii - unlike nucleic acids, proteinaceous molecules or parts thereof can be designed to express a certain activity. Such activities include enzymatic activities, signaling activities, binding activities, stabilizing activities ect. It is clear that a new feature encoded by the protein can be used for various purposes, for example: (I) regulate a promoter, or translational of a plasmid computing construct (II) restriction or modification of a plasmid computing construct modification of an RNA sequence (e.g. which enclosed a protein before or after splicing)(III) modification of a protein output resulting from DNA computing, (IV) Lysis of a living cell which is producing this protein (in this way cells which product this particular solution are killed, but, also excrete the protein to the medium) (V) a protein which is transported through or integrated into a biological membrane. In this way a solution which contains this protein sequence as part of the total can secrete the total protein to the growth medium or expose part of the protein to the outside of the cell, thereby making selective detection possible (e.g. selection by antibodies against the computational protein or its parts).
   (VI) A new feature can also be an antigen binding domain. A library of antigen binding domain can be used to encode a computational problem. A library may be phage display library of functional equivalent thereof.
iv - since marking of proteins does not occur through hybridization there is no necessity to use only unbranched molecules to encode values for variables of a computational problem.
v - other advantages include the possibility of very sensitive detection and the production of large quantities of proteinaceous molecules.

Computational use of proteinaceous molecules may take advantage of one or more of the special properties of proteinaceous molecules. Several embodiments are listed below. However, the invention is not limited to these specific embodiments. Many more applications can be devised now that the general principle of computing with proteinaceous molecules is disclosed.

Because of the increase in the number of building blocks, the actual number of building blocks needed to encode a solution in a proteinaceous molecule can be reduced compared to nucleic acid molecules. Due to the difference in the kind of binding of binding molecules to proteinaceous molecules as compared with nucleic acid hybridization, more complex computational problems can be represented in the proteinaceous molecule with no or very limited false binding. Furthermore, the activity of a proteinaceous molecule may be used to facilitate detection of a particular solution. For instance, a particular solution may be encoded in such a way as to result in a proteinaceous molecule which is capable of converting a substrate into a dye that can be detected. Screening for this solution can then be performed by supplying the substrate and screening for the occurrence and/or presence of the dye.

Therefore, the invention in one aspect provides the use of a proteinaceous molecule as a representation of a combination of values for variables of a computational problem.

In one embodiment said proteinaceous molecule is used in a method for determining whether a nucleic acid molecule comprises a nucleic acid sequence that represents at least part of a solution to a computational problem said method comprising
- translating at least a part of said nucleic acid sequence into a proteinaceous molecule,
- and characterizing said proteinaceous molecule.

This embodiment utilizes the principle that the sequences of DNA or RNA can be designed to also encode particular protein sequences. Because the translation of a nucleic acid into a proteinaceous molecule occurs in a sequence dependent fashion, the sequence of the proteinaceous molecule is dependent on the nucleic acid sequence. Information on the values for the variables of the computational problem is maintained in the proteinaceous molecule. The sequence of the proteinaceous molecule therefore provides a readout for a solution to the computational problem. Advantages of this method over the existing methods are: (i) The information stored in the DNA or RNA is highly amplified by the translation process. (ii) The length and the sequence, and also many characteristics of the proteins which result directly from the protein sequence can be readout by various techniques with higher sensitivity than with DNA or RNA. (iii) The information storage in proteins is by principle degenerate (i.e. not all information of the triplet code have an encoding into amino acids) and therefore part of the DNA or RNA information is not important for the protein code. Therefore, the generated protein readout allows the additional encoding of computational operators in the DNA or RNA sequence which are not interfering with the readout. (iv) The proteins encoded by the DNA or RNA computer can have an enzymatic or regulatory function: for example they can give feedback on computational steps. In this way automated feed-back mechanisms can be encoded directly into the DNA or RNA computer. In this way the protein is more than just a read-out mechanism. It can have a function of switches in the computing process.

Since the biological translation of RNA to protein uses a degenerate code, there is (theoretically) more capacity for information storage present in the DNA or RNA encoding the protein sequence than in the protein sequence itself. This aspect of the invention can be used when it is useful to perform operations on the DNA or RNA sequence which should not result in any change in the readout (i.e. detection of the protein). For example, two pieces of DNA which encode identical protein sequences can differ in a restriction enzyme recognition site. The advantage offered hereby is similar to that in silicon-based computers: one can use the same read-out instrument (monitor) after changing the "hardware" configuration. Since in the case of DNA or RNA computing the "hardware" configuration also serves as the "software" implementation this principle advantage can be seen as very important.
The characterization of the proteinaceous molecule can occur through any means or combination of means for the identification of at least part of a proteinaceous molecule. In a preferred embodiment at least part of said characterization is performed with a binding molecule capable of binding to at least part of said proteinaceous molecule. Binding of a binding molecule can be detected in a number of ways. In a preferred embodiment, the binding molecule comprises a fluorophore. Detection of the binding molecule can then be accomplished by detecting the fluorophore. Many different fluorophores are known in the art, and many of these can be coupled to binding molecules.

The read out of a solution can be done on a collection of proteinaceous molecules representing said solution or, alternatively, the read out can be done on a single proteinaceous molecule. Various techniques for the detection of a single proteinaceous molecule are available in the art. For instance it is possible to detect fluorescent molecules on solid surfaces in a way similar to "chromosome painting". Alternatively, single molecules can be detected in solution, using correlation spectroscopy or wide field imaging of single molecules using lasers.

By using different fluorophores for binding molecules specific for different values it is possible to detect the presence of multiple variables after binding of the various binding molecules to the proteinaceous molecules. This can be achieved by detecting each fluorophore separately, for instance by using the appropriate filters to block the signal of other fluorophores. Alternatively, the fluorophores can be chosen such that each combination of fluorophores results in a color (upon detection) that can be distinguished from each possible other combination. This feature allows the detection of a set of values in one pass.

It is clear that binding of a binding molecule to a proteinaceous molecule does not have to be detected with a fluorophore. There are many other ways known in the art. For instance a binding molecule can be attached to a solid surface. A bound proteinaceous molecule can then be detected in a number of different ways. Another non-limiting example of detection of binding of a binding molecule is proteolytic cleavage by a protease that can recognize a particular protein sequence on the proteinaceous molecule. Binding is then ascertained by detection of a cleavage product.

In another preferred embodiment the characterization is performed using a mass spectrometer.

By combining a proteinaceous format for representing a solution to a computational problem with a nucleic acid format, features of both formats can be used to select particular solutions from a library of solutions. For instance, in the nucleic acid format solutions may be selected or not, based on, for instance, the presence of restriction enzyme cutting sites in (part of) the sequence. Subsequently, the selected nucleic acids can be used as template for the generation of proteinaceous molecules whereupon the resulting library of solutions in protein format, which is reduced as compared to the original library in nucleic acid format, is further scrutinized for the presence of a solution. The conversion of a nucleic acid molecule into a proteinaceous molecule is preferably performed in a cell. To this end, the nucleic acid molecule preferably comprises an amplification signal allowing amplification of said nucleic acid molecule in said cell. The introduction of nucleic acid into a cell can be achieved through any means. Preferably, the introduction of nucleic acid into a cell is achieved with a gene delivery vehicle comprising said nucleic acid. In a preferred embodiment said nucleic acid comprises replicanting cosmid, units such as a plasmid, a phage and/or a virus or a functional equivalent thereof. A functional equivalent of a cosmid, a plasmid, a phage and/or an RNA or DNA virus comprises the same replication capacity in a cell, in kind, not necessarily in amount.

One of the attractive features of a plasmid format is detailed below. This embodiment describes a systematic approach that is applicable to a variety of widely studied algorithmic problems. A single, circular, double stranded DNA molecule contains an origin for replication, which allows the production, using bacteria, of copies of the molecule whenever needed. Computations are achieved by making molecular modifications, in parallel in distinct test tubes, beginning with a test tube containing a vast number of copies of the original plasmid.

The Plasmid Computing Concept can be explained as follows. Let P be a plasmid; let k be a positive integer; and let s₁, s₂, ... , sₖ be k pairwise non overlapping subsegments of P. Suppose also that, for each i, the nucleotide sequence of sᵢ occurs nowhere else in the plasmid P. Subsegments chosen in this way will be called 'stations' of the plasmid.

In this embodiment the method of computing is to begin each computation with a test tube of water (or appropriate buffer) that contains a vast number of identical k-station plasmids. During a computation the plasmids are modified in such a way as to be readable later. Modification takes place only at the stations. Each station sᵢ, at any time during a computation, is in one of two states, which we regard as a representation of one of the bits: 1 or 0. Consequently, each plasmid plays a role comparable to that of a k-bit data register in a conventional computer. The memory in plasmid computing is simply the body of water with its plasmid content. Water allows rapid partitioning of memory into subsets. Stirring, or diffusion, allows the assumption that each of the members of such a partition contains the same variety of molecules. Distinct members of the partition can be modified in different ways and reunited again into a single test tube. The design of a plasmid computation will include a procedure for reading the solution from the final condition of the memory. It is important to observe that the choice of the procedure for modifying the data register molecules is not specified in the concept of plasmid computing. Many choices for modifying the plasmids are being considered. As an example of such modification is the most classical method of genetic engineering: cut and paste.

The following are three positive features of the plasmid method: (i) A user purchases, and possibly perfects to his/her specification, a DNA plasmid for use in computation. There is no further DNA to be purchased. Additional plasmids may be produced in bacteria as needed. Of course, a later 'upgrade' to a plasmid having more stations, or to one that is more suitable for the use of an improved read/write technology might occur. (ii) The plasmid (in buffer) is the computer. The user can develop a thorough familiarity with this single plasmid and its behaviors in the presence of a variety of enzymes in various buffers under various temperatures and salt concentrations. The user's experience with this plasmid is cumulative. The user is not continually adjusting to the idiosyncrasies presented by molecules with new sequences. (iii) The plasmids are kept in double stranded form at all times and throughout all computations. There is no tangled self-annealed single stranded DNA or PCR amplification step to cause trouble. This use of DNA follows nature: Recall that during both replication and transcription, DNA is not pulled apart into long single strands. Instead, small portions of the DNA are opened up and carefully controlled by associated proteins that prevent the occurrence of undesired annealing as encountered in some current forms of DNA computing. It is however, possible to use PCR, for instance, near the end of a computation to 'read off' linear segments from the plasmids, even though the PCR may pull plasmids into single stranded form. (iv) Nucleic acid in the plasmid representing a solution to the computational problem can be translated into a proteinaceous molecule by the transcription and translation machinery of the cell.

One advantage of using a proteinaceous molecule to represent a combination of values for variables of a computational problem is that said proteinaceous molecule may be designed to comprise a function. In a preferred embodiment said function is associated with a with a part of said proteinaceous molecule which represents a particular value for a variable of said computational problem. In this way, screening for a particular value of a variable can be accomplished by screening for said function in a proteinaceous molecule. A proteinaceous molecule representing a particular desired solution of a computational problem may even be designed such that the product of an activity of one value is the substrate of an activity of another value. In this way a nested set of activities can be designed so that with one or a limited number of starting substrates the presence of many different variables can be ascertained. Entire metabolic pathways may be incorporated in such a way.

In one embodiment, the proteinaceous molecule comprises a tag. In one embodiment said tag comprises a purification tag. A tag is helpful for various reasons. One application of such a tag is the purification of said proteinaceous molecule from other molecules. For instance the removal of cellular proteins, when said proteinaceous molecule is produced in a cell. Various tag specific protein purification methods are available in the art.

In one aspect the invention provides a library of proteinaceous molecules representing essentially all relevant solutions to at least one computational problem. Such a library can be produced synthetically using methods known in the art. However, preferably, said library is produced using a library of nucleic acids encoding said library proteinaceous molecules. The invention therefore further provides a nucleic acid library encoding a library of proteinaceous molecules according to the invention. Preferably, at least one nucleic acid is capable of replication. Preferably, said nucleic acid is capable of replicating in a cell. Preferably, said nucleic acid capable of replication comprises a plasmid, a cosmid, a phage or a virus or a functional equivalent thereof. More preferably, said nucleic acid library comprises an expression library.

In another aspect, the invention provides a method for detecting a proteinaceous molecule representing a combination of values for variables of a computational problem comprising contacting a library of proteinaceous molecules of the invention, with a set of binding molecules designed for binding to proteinaceous molecules representing solutions.

In a preferred embodiment said binding molecules are designed for binding to proteinaceous molecules representing false or good solutions.

In yet another aspect the invention provides an apparatus for providing a solution to a computational problem comprising a library of the invention, and means for detection of a solution. In a preferred embodiment, said means for detection of a solution comprises a mass spectrometer or functional equivalent thereof.

A proteinaceous molecule as used herein consists of at least two building blocks linked together by a peptide bond. At least one of said building blocks is one of the 20 common amino acids or a functional equivalent thereof.

### EXAMPLES

### Computing with plasmids.

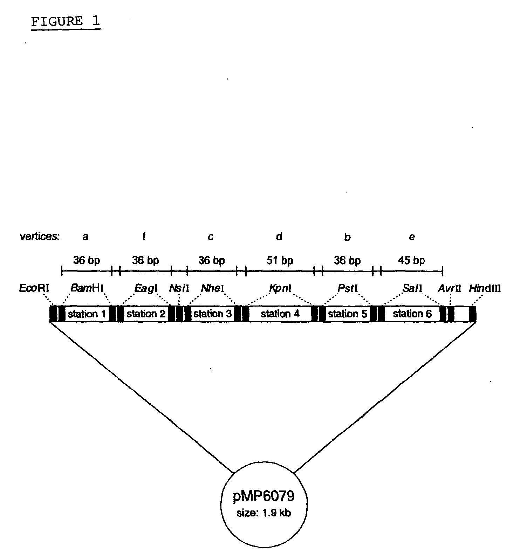

Fig. 1 gives a sketch of the computational plasmid used here. Its construction is based on plasmid pOK12 (J. Vieira and J. Messing, *Gene* 100, 189-194 (1991)) which was opened up and a specially constructed segment of 297 base pairs (bps) was inserted before recircularizing to form the final plasmid, pMP6079, used in computations here. The six stations of pMP6079 are all included in the specially designed insert (see Fig. 1). A unique restriction enzyme is associated with each of the stations. Each station is bounded by a pair of sites for its associated restriction enzyme.

The initial condition of each station of the plasmid is understood to represent the bit 1. The bit 1 being represented at a specific station can be rewritten as a 0 by the following technique: The plasmid is cut at both sites with the restriction enzyme associated with the station. The short segment in this station consisting of half of each restriction site, together with the portion of pMP6079 they bound, drops out. The longer segment of pMP6079 is then recircularized using a ligase enzyme. One of the two original bounding restriction sites is reconstituted in the ligation process. After the deletion of the specified material from the station, the station is regarded as representing the bit 0. For the reading process used here it is fundamental that, each time a bit is set to 0, the circumference of the plasmid is reduced by the length in base pairs (bps) of the segment deleted. The enzymes and the segment lengths associated with the stations of the computational plasmid used here are given in Fig. 1. The variation in the lengths of the stations of the plasmid is sufficiently small, so that from the shortening produced by any combination of deletions at the stations, the number of deletions made is uniquely determined. This property is necessary for the reading procedure used here.

We move now to consider our first computational problem. Each undirected graph G=(V,E), having vertex set V and edge set E, provides an instance of the fundamental algorithmic problem known as the Maximum Independent Set (MIS) Problem (M. R. Garey and D. S. Johnson, Computers and intractability-a guide to the theory of NP-completeness. (Freeman, New York, 1979)): A subset S of the set V of vertices of G=(V,E) is said to be independent if, for each edge in E, S does not contain both vertices belonging to that edge. The MIS problem associated with G requires the calculation of the largest cardinal number that occurs as the cardinality of an independent subset of V. The calculation of this cardinal is known to be NP-complete (M. R. Garey and D. S. Johnson, Computers and intractability-a guide to the theory of NP-completeness. (Freeman, New York, 1979)). It is also natural to request that a specific independent subset of maximum cardinality be exhibited. A solution for these two problems by plasmid computing is given for the graph G=(V,E) having as its vertex set V={a,b,c,d,e,f} and having as its set E of edges the set of four unordered pairs: {a,b}, {b,c}, {c,d}, and {d,e}. Note that, for instances of the MIS problem, it is not required to place an isolated vertex (such as f in the present instance) in correspondence with a station since an isolated vertex must certainly be included in any maximum independent set. In our second computation all six vertices will require corresponding sites.

With each of the six vertices of the graph we associated a station of our computational plasmid as shown in Fig. 1. The computation began with a test tube T₀ containing 80 ng of the computational plasmid. Conceptually, this plasmid represents the entire vertex set {a,b,c,d,e,f}. If there were no edges in E, this set would be the unique independent subset of maximum cardinality. Recall that the length of the specially inserted segment that contains all six stations is 297 bps.

The presence of edge {a,b} in the set E of edges of G requires that no independent subset of V can contain both a and b, although an independent subset might contain either a or b. To incorporate this requirement biochemically, the content of T₀ was divided equally into test tubes T₁ and T₂. In T₁ the plasmids were cut (at two sites) with *Bam*HI and were then ligated back into circular form resulting in plasmids having a circumference reduced by 36 bps. In T₂ the plasmids were cut (at two sites) with *Pst*I and were then ligated back into circular form resulting in plasmids having a circumference reduced by 36 bps. Amplification of the resulting plasmids from tubes T₁ and T₂ was done by transformation into *E.coli* (10). The plasmids amplified from tubes T₁ and T₂ were united into a new tube T₀.

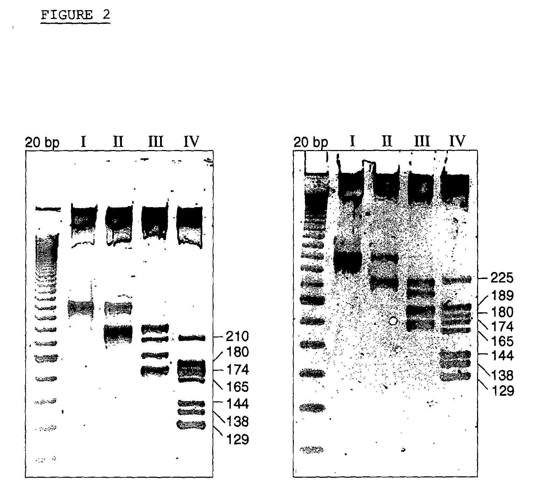

At this stage T₀ was predicted to contain two distinct molecular varieties, each having insert regions of the same length 297-36=261 bps. These two molecules represent the subsets {b,c,d,e,f} and {a,c,d,e,f}. If there had been no further edges in E, each of these sets would have been an independent set having maximum cardinality. (These inserts of length 261 are seen below in Column I of Fig.2A.).

The presence of each of the remaining three edges {b,c}, {c,d}, and {d,e} in E required, in turn, an entirely similar subdivision of the then current tube T₀ into new tubes T₁ and T₂ followed by cutting with the appropriate enzyme for each tube, ligation, transformation in *E.coli,* isolation and purification. The plasmids amplified from tubes T₁ and T₂ were then united into a new tube T₀.

The final tube T₀, obtained after each of the four edges in E were taken into account biochemically, contained nothing but plasmids having inserts of the appropriate length to represent independent sets.

A careful analysis (taking into account the small variation in the number of base pairs deleted as each station is set to zero), predicted that the lengths of the inserts occurring in the plasmids in tube T₀ should be:
After only {a,b} has been accommodated: Tube T₀ was expected to contain plasmids having inserts of the following length: 261 bps.

After only {a,b} and {b,c} have been accommodated: Tube T₀ was expected to contain plasmids having inserts of the following lengths: 261, 225 bps.

After only {a,b}, {b,c}, and {c,d} have been accomodated: Tube T₀ was expected to contain plasmids having inserts of the following lengths: 225, 210, 189,174 bps. After {a,b}, {b,c}, {c,d}, and {d,e} have all been accomodated: Tube T₀ was expected to contain plasmids having inserts of the following lengths: 210, 180, 174, 165, 144, 138, 129 bps.

A gel separation of the inserts cut from the plasmids remaining in T₀ after all edges were taken into account was a required step of the computational procedure. It provides our current choice of technology for reading the solution of the problem. However, as a test on the quality of the biochemical protocols used in the computation, a portion of the contents of T₀ was removed at each of these four stages of T₀ and all four samples were analyzed on a polyacrylamide gel (10). The resulting gel separation is presented as Fig.2A. Leftmost is a calibration column. Columns I, II, III, and IV exhibit (in the lower two thirds) the locations on the gel of the inserts cut from the plasmids residing in T₀ at the conclusion of each of the four stages of the computation for which lengths were predicted in the paragraph above. The long residues remaining from the plasmids after the inserts were cut out occupy the top portion of the gel. We concluded from this gel that the protocols used were successful.

As the final step of the computation the length in base pairs (bps) of the longest remaining fragment of the insert was read from Column IV of the gel in Fig.2A. This gave 210 bps. From this length it was concluded that the minimum number of stations of PMP6079 that were required to be set to zero in order to meet the requirement of independence was two. Hence the largest cardinal number that occurs as the cardinal number of an independent is 6-2=4. Thus the solution of this instance of the NP-complete problem is: 4. If it is also desired to exhibit an independent set having this maximum cardinal number, this can be accomplished in two ways. The molecules constituting the band on the gel having length 210 encode independent sets having this cardinality. This band can be cut out and the molecules it contains can be cloned and sequenced. In the present case there is only one maximum independent set, namely {a,c,e,f}. If desired, the sequencing step can be replaced by partitioning the molecules from a single clone into six tubes in which the presence of each of the deletable station fragments is tested.

A second computational problem can be formulated as follows. Each undirected graph G=(V,E), having vertex set V and edge set E, provides an instance of the algorithmic problem known as the Minimum Dominating Set (MDS) Problem (M. R. Garey and D. S. Johnson, Computers and intractability-a guide to the theory of NP-completeness. (Freeman, New York, 1979)). A subset S of the set V of vertices of G=(V,E) is said to be a dominating set of G if, for each vertex v in V, either v is in S or S contains at least one vertex u for which {u,v} is in E. The MDS problem associated with G requires the calculati¹ on of the smallest cardinal number that occurs as the cardinal number of a dominating set of V. The calculation of this cardinal number is known to be NP-complete (M. R. Garey and D. S. Johnson, Computers and intractability-a guide to the theory of NP-completeness. (Freeman, New York, 1979)). It is also natural to request that a specific dominating set of minimum cardinality be exhibited. A solution for these two problems by plasmid computing is given for the graph G=(V,E) having as its vertex set V={a,b,c,d,e,f} and having as its set E of edges the set of five unordered pairs: {a,b}, {c,b}, {b,f}, {f,d} and {f,e}. By the neighborhood N(v) of a vertex v in a graph G=(V,E) is meant the set N(v) = {u in V: either u=v or {u,v} is in E}. Our procedure for solving the MDS problem began with a list of the neighborhoods of each of the vertices in V. The laboratory steps required were reduced by listing the neighborhoods in order of size, smallest to largest. For the graph we have treated, such a list is: N(a)={a,b}, N(c)={c,b}, N(d)={d,f}, N(e)={e,f}, N(b)={b,a,c,f}}, N(f)=(f,b,d,e}. Note that a subset S of V is a dominating set precisely in the case that it contains at least one vertex from each of these six neighborhoods. Since N(b) contains N(a) and N(f) contains N(d), if a set S contains at least one vertex in each of the first four sets then it contains at least one vertex in each of the larger sets. Consequently, a subset S of V is a dominating set precisely if it contains at least one vertex in each of the first four neighborhoods.

With each of the six vertices of the graph we associated a stati² on of our computational plasmid according to Fig. 1. The computation began with a test tube T₀ containing 80 ng of the computational plasmid. In contrast with the MIS computation treated above, here we regarded the initial plasmid as representing the empty subset of the vertex set {a,b,c,d,e,f}.

The neighborhood N(a)={a,b} in G requires that every dominating set contain either a or b. To incorporate this requirement biochemically, the content of T₀ was divided equally into test tubes T₁ and T₂. In T₁ the plasmids were cut (at two sites) with *Bam*HI and were then ligated back into circular form resulting in plasmids having a circumference reduced by 36 bps. In T₂ the plasmids were cut (at two sites) with *PstI* and were then ligated back into circular form resulting in plasmids having a circumference reduced by 36 bps. Amplification of the resulting plasmids from tubes T₁ and T₂ was done by transformation into *E.coli* ^{[1]}The plasmids amplified from tubes T₁ and T₂ were united into a new tube T₀.
¹ Bacterial strain used was XL-1 blue. Plasmid DNA from was isolated from this strain using a plasmid purification kit from Qiagen, The Netherlands.

At this stage T₀ was predicted to contain two distinct molecular varieties, both having insert regions of the same length 297-36=261 bps. These two molecules represent the subsets {a} and {b}. If there had been no further neighborhoods to accommodate, each of these sets would have been a dominating set having minimal cardinal number. (These inserts of length 261 are seen below in Column I of Fig.2B.)

Each of the three further neighborhoods N(c)={c,b}, N(d)={d,f}, and N(e)={e,f} required, in turn, an entirely similar subdivision of the then current tube T₀ into new tubes T₁ and T₂ followed by cutting with the appropriate enzyme for each tube, ligation, transformation in *E.coli,* isolation and purification. The plasmids amplified from tubes T₁ and T₂ were then united into a new tube T₀.

The final tube T₀, obtained after each of the four neighborhoods was taken into account biochemically, contained nothing but plasmids having inserts of the appropriate lengths to represent dominating sets.

A careful analysis (taking into account the small variation in the number of base pairs deleted as each station is set to zero), predicted that the lengths of the inserts occurring in the plasmids in tube T₀ should be:
After only N(a)={a,b} has been accommodated: Tube T₀ was expected to contain plasmids having inserts of the following length: 261 bps.

After only N(a) and N(c)={c,b} have been accommodated: Tube T₀ was expected to contain plasmids having inserts of the following lengths: 261, 225 bps.

After only N(a), N(c), and N(d)={d,f} have been accommodated: Tube T₀ was expected to contain plasmids having inserts of the following lengths: 225, 210, 189, 174 bps.

After N(a), N(c), N(d), and N(e)={e,f} have all been accommodated: Tube T₀ was expected to contain plasmids having inserts of the following lengths: 225, 189, 180, 174, 165, 144, 138, 129 bps.

A gel separation of the inserts cut from the plasmids remaining in T₀ after all edges were taken into account was a required step of the computational procedure since it provides our choice of technology for reading the solution of the problem. However, a portion of the contents of T₀ was removed at each of these four stages of T₀. The resulting gel separation is presented as Fig.2B. Leftmost is a calibration column. Columns I, II, III, and IV exhibit (in the lower two thirds) the locations on the gel of the inserts cut from the plasmids residing in T₀ at the conclusion of each of the four stages of the computation for which lengths were predicted in the paragraph above. The long residues remaining from the plasmids after the inserts were cut out occupy the top portion of the gel. We concluded from this gel that the protocols used were successful.

As the final step of the computation the length in base pairs (bps) of the longest remaining fragment of the insert was read from Column IV of the gel in Fig.2B. This gave 225 bps. From this length it was concluded that the minimum number of stations of PMP6079 that were required to be set to zero in order to meet the requirement of producing a dominating set is two. Thus the solution of this instance of the NP-complete problem is: 2. If it is also desired to exhibit a dominating set having this minimum cardinal number, this can be accomplished in either of the same two ways that were described for the MIS problem.

From the above it is apparent that prototype computations have been carried out successfully using the plasmid alternative for DNA computing. This concept is not wedded to the specific biochemical techniques used here. The natural domain for computing in this style may be an aqueous solution of a vast number of initially identical molecules which can be altered at fixed locations (stations) on the molecules either chemically, magnetically, electrically, or by use of electromagnetic radiation. Constraining features of the procedures used here were: (i) the time required for the enzymatic processes to go sufficiently near to completion, (ii) the diminution of DNA during the separation of the plasmids from the enzymes that have acted on them, and (iii) the need for amplification steps due to the diminution of the DNA. It might seem that the expansion of our procedure to larger problems is limited by the available number of restriction enzymes. However, techniques have been described in which specifically designed protein nucleid acid (PNA) sequences can suppress restriction of particular restriction sites (11), thereby allowing the use of the same restriction site for multiple stations.

### Computing with proteinaceous molecules.

One method disclosed in detail is based on the principle decribed above. Specialized plasmids can be constructed in which the vertices of computational problems from the NP complete class are encoded in DNA sequences, called stations. The stations are assembled in a part of the plasmids which we call the DNA-computational region. By a particular scheme of treatments with enzymes the plasmid pool results in a large set of possible answers to a particular computational problem. The answer to the answer to the computational problem can be read out from the DNA fragment length sizes. The principle of protein computing is implemented by the following invention: The DNA computational region is cloned behind a promoter sequence which enables transcription of the downstream sequences. The entire DNA fragment is cloned in such a way that the computational stations are downstream of a protein translation signal and that translation can continue through the stations. The stations present in the DNA molecule are designed to contain information for an amino acid translation code. In this way each station now stands for a potential protein sequence. For instance, if no stop-codons are present in each of the stations the original plasmid will encode a protein sequence based at least on the entire computational region. After treatment of the computational plasmid which results in a large subset of plasmids the DNA is subjected to translation (either in an in vitro or in vivo system). The result is a mixture of proteins which can be analyzed for protein content for instance by electrophoresis, size exclusion chromatography, isoelectric focusing or mass spectrometry. In one example of an experiment performed in our laboratory we have used the plasmid outlined in Fig.1. This plasmid is designed so that all translated protein is directly fused to a protein tag (in this case maltose binding protein) so that all proteins can be directly purified by a one step purification method on a maltose resin column (see also description of fig 1). Gel-electrophoresis showed that the desired proteins could be successfully purified on a maltose binding column after the plasmids were transformed to an E. coli strain. The direct advantage of this method is that that the quantity of molecules which represent solutions is hugely amplified. A second advantage which we have not used yet, is that the computational output at the protein level can have its own function. This was demonstrated by inserting into the computational region a DNA region encoding a peptide sequence called ENOD40 which has been implicated to be a growth regulator in plants. The presence of this DNA region encoding the peptide is therefore also producing a new functionality.

### References

1. L. Adleman, *Science* 266, 1021-1024 (1994).
2. M. R. Garey and D. S. Johnson, Computers and intractability-a guide to the theory of NP-completeness. (Freeman, New York, 1979).
3. Gh. Paun, S. Rozenberg, A. Salomaa, DNA computing- New computing paradigms. (Springer Verlag, Berlin, 1998).
4. H. Rubin and D. Wood, DNA based computers III (American Mathematical Society, Providence, Rhode Island, 1999).
5. M. Hagiya, *New Generation Computing* 17, 131-151 (1999).
6. Q. Ouyang, P. D. Kaplan, S. Liu, A. Libchaber, *Science* 278, 446-449 (1997).
7. T. Head, in *Pattern formation in biology, vision and dynamics.,* A. Carbone, M. Gromov, P. Pruzinkiewcz, Eds. (World Scientific, Singapore and London, 1999).
8. T. Head, M. Yamamura, S. Gal, in *Proceedings of the congres on evolutionary computing,* (IEEE Service Center, Piscataway, New Jersey, 1999).
9. J. Vieira and J. Messing, *Gene* 100, 189-194 (1991).
10. Bacterial strain used was XL-1 blue. Plasmid DNA from was isolated from this strain using a plasmid purification kit from Qiagen, The Netherlands.
11. P. E. Nielsen, M. Egholm, R. H. Berg, O. Buchardt, *Nucleic Acids Res.* 21, 197-200 (1993).

### LEGENDS TO FIGURES

Fig.1. In this figure the plasmid pMP6079 which is used as template for a 6-station problem is shown. Plasmid pMP6079 was constructed by inserting a DNA fragment of 297 base pairs which was synthetically produced, into plasmid pMP4800 encoding ampicilin resistance and origin of replication derived of the pOK12 plasmid (9). The number of basepairs (bp) which is deleted if the stations are set to zero by restriction and religation is indicated on top together with the vertex-station correspondence. Note that also additional insertion sites *(NsiI* and *AvrII)* are incorporated so that the problem can be extended by insertion of additional stations. The encoded peptides in the present plasmid are tags. Antibodies are available that are able to bind to the tags. The names of the tags (listed below) are derived from the commercial supplier of antibodies capable of binding to a tag. The plasmid contains an expression cassette with the following elements (a promoter; a translation start site; a maltose binding protein; a protease cleavage site; a computational part (bounded by EcoRI and HindIII restriction sites) and a stop codon). The computational part comprises the stations. The peptides in the stations are: a His tag (station 1); a Myc tag (station 2): a Flag tag (station 3): an S tag (station 4): proteolytic cleavage sites (station 5) and an ENOD40 tag (station 6).

Fig. 2. Polyacrylamide gel electrophoresis of DNA samples treated with restriction enzymes as described in text. Panel A shows the plasmids which result from the procedure followed to solve the maximum independent set problem. Panel B shows the plasmids which result from the procedure followed to solve the minimum dominating set problem. The resulting plasmids were digested with the enzymes *Eco*RI and *Hind*III which border the 297 base pairs fragment used for the calculations. The column marked M shows a marker DNA ladder increasing 20 bp in length starting from the lowest band visible of 100 bp. DNA samples were run on an 8% polyacrylamide gel for 15 hours at 45 volts. Visualization was done by CyberGreen (Molecular Probes Europe, Leiden, the Netherlands).

## Claims

1. Use of a proteinaceous molecule as a representation of a combination of values for variables of a computational problem.

2. Use of a proteinaceous molecule according to claim 1 in a method for determining whether a nucleic acid molecule comprises a nucleic acid sequence that represents at least part of a solution to a computational problem said method comprising
- translating at least a part of said nucleic acid sequence into a proteinaceous molecule,
- and characterizing said proteinaceous molecule.

3. A use according to claim 1 or claim 2, wherein at least a part of said proteinaceous molecule is capable of displaying a function.

4. A use according to claim 3, wherein said function comprises a regulatory function and/or an enzymatic activity.

5. A use according to claim 3 or claim 4, wherein said function is associated with a part of said proteinaceous molecule which represents a particular value for a variable of said computational problem.

6. A use according to anyone of claims 1-5, wherein said proteinaceous molecule comprises a tag.

7. A use according to claim 6, wherein said tag comprises a purification tag.

8. A use according to anyone of claims 1-7, wherein said nucleic acid molecule is a member of a library of nucleic acid molecules.

9. A use according to claim 8, wherein said library represents a set of combinations of values for variables of said computational problem.

10. A use according to anyone of claims 2-9, further comprising amplifying at least part of at least a nucleic acid in a cell.

11. A use according to claim 10, wherein said at least a part of at least one nucleic acid comprises a plasmid, phage and/or virus.

12. A library of proteinaceous molecules representing essentially all relevant solutions to at least one computational problem.

13. A nucleic acid library encoding a library of proteinaceous molecules according to claim 12.

14. A nucleic acid library according to claim 13, wherein at least one nucleic acid is capable of replication.

15. A nucleic acid library according to claim 14, wherein said nucleic acid is capable of replication comprises a plasmid, cosmid, phage or virus or a functional equivalent thereof.

16. A nucleic acid library according to anyone of claims 13-15, wherein said library comprises an expression library.

17. A method for detecting a proteinaceous molecule represent a combination of values for variables of a computational problem comprising contacting a library according to claim 12, with a set of binding molecules designed for binding to proteinaceous molecules representing solutions.

18. A method according to claim 17, wherein said binding molecules are designed for binding to proteinaceous molecules representing false solutions.

19. An apparatus for providing a solution to a computational problem comprising a library according to anyone of claims 12-16, and means for detection of a solution.

20. An apparatus according to claim 19, wherein said means for detection of a solution comprises a mass spectrometer or functional equivalent thereof.
